# DEMANDE DE BREVET EUROPEEN

(11) **EP 1 561 974 A2**
(43) Date de publication de la demande: **10.08.2005**
(21) Numéro de dépôt: 05356018.1
(22) Date de dépôt: 28.01.2005
(51) Int. Cl.: F16H 63/42

(54) **Indicateur de rapport engagé**

(30) Priorité: 04.02.2004 FR 0401065
(71) Demandeur: Gonzalez, Patrick, 69006 Lyon (FR)
(72) Inventeur: Gonzalez, Patrick, 69006 Lyon (FR)

(57) **Abrégé**

Dispositif pour indiquer le rapport engagé d'une boîte à vitesses de type moto caractérisé en ce qu'il comporte un capteur (2) situé au niveau du sélecteur (1), un boîtier électronique gérant les entrées et sorties du dispositif, et un afficheur de type Ultra-luminescant pour être visible en toute situation. Ce montage peut être utilisé sur n'importe quel engin étant équipé ce type de boîte a vitesses.

## Description

La présente invention concerne un dispositif permettant de savoir en temps réel le rapport engagé d'une boîte à vitesses à sélecteur de type moto.
Si on prend le cas d'une moto, cette information est connue par le pilote de part sa réflexion.
Un voyant indique la position neutre ou la dernière vitesse engagée. Les autres vitesses ne sont jamais affichées.

Le dispositif selon l'invention permet de remédier à cet inconvénient. Il comporte selon une première caractéristique un capteur de mouvement relié à un boîtier électronique qui commande un afficheur. Le capteur se présente sous deux forment différentes. Tous deux sont greffés au sélecteur de vitesses, ce qui permet au boîtier de savoir à tout moment ses déplacements, donc de connaître le rapport engagé. Le boîtier électronique est logé sur l'engin et l'afficheur est sur le tableau de bord. Une troisième forme de capteur peut être utilisée. Il est de type senseur linéaire et est accouplé à un boîtier regroupant l'électronique et l'afficheur.

Les dessins annexés illustrent l'invention :

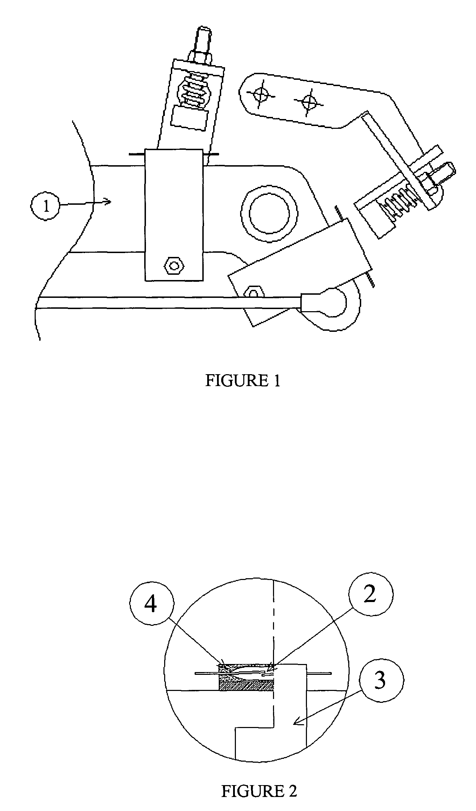

La figure 1 représente l'implantation du premier capteur sur le sélecteur.
La figure 2 représente la partie mobile du premier capteur.
La figure 3 représente la partie fixe du premier de capteur.
La figure 4 représente en coupe la composition du deuxième capteur.
La figure 5 représente le schéma électrique de l'invention.
La figure 6 représente en coupe la composition de l'afficheur.

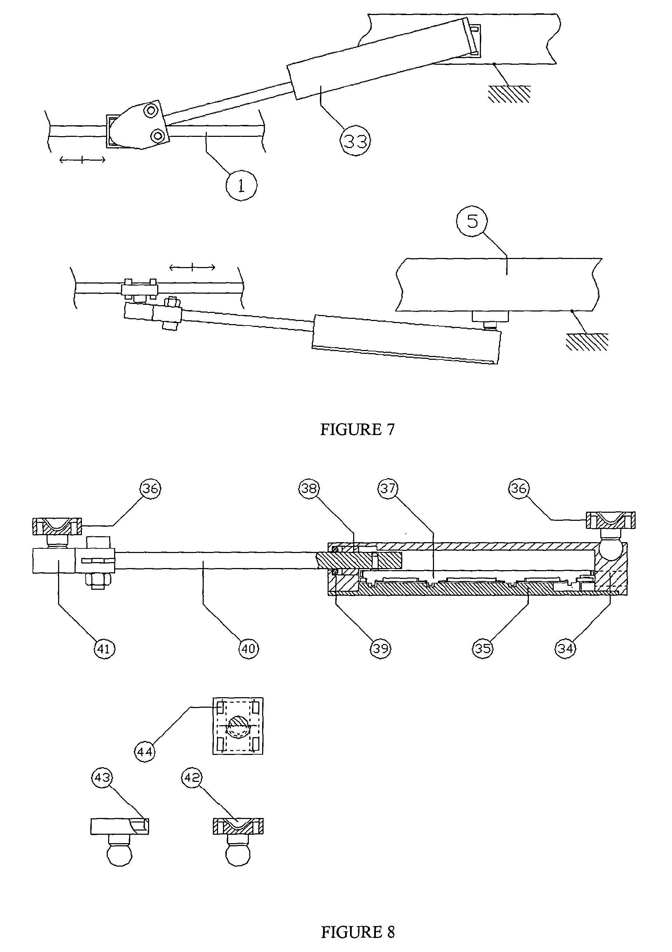

La figure 7 représente l'implantation du troisième capteur sur le sélecteur.
La figure 8 représente en coupe la composition du troisième capteur.

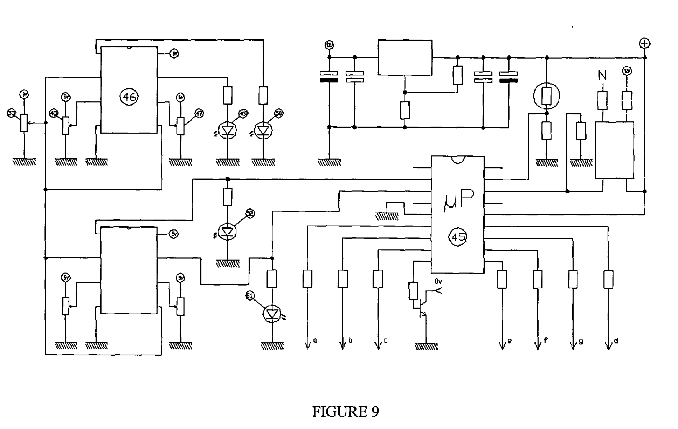

La figure 9 représente le schéma électrique de l'invention avec le troisième capteur.

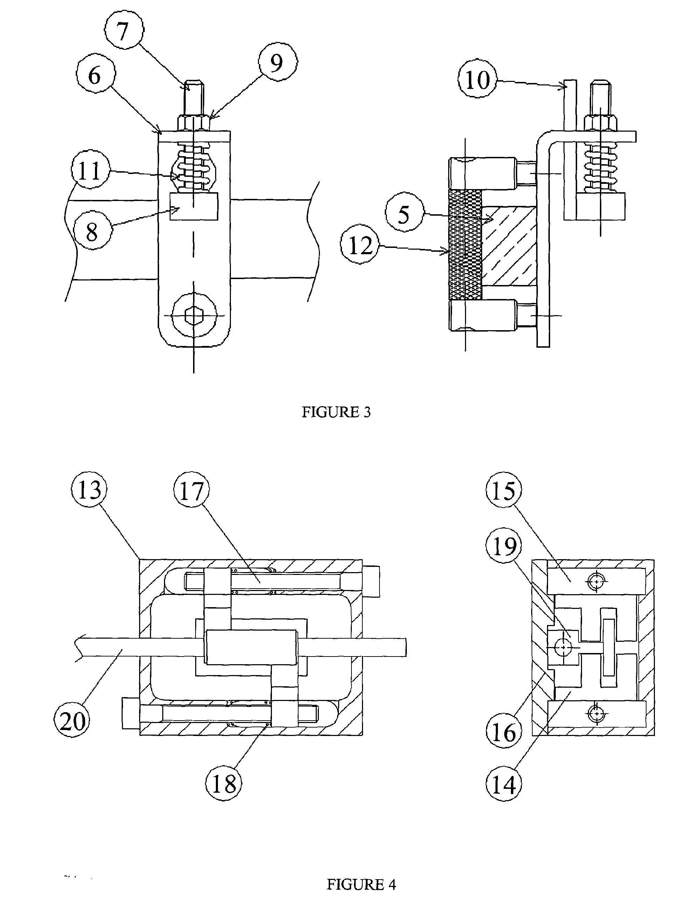

En référence à ces dessins :
- 1^{er} type de capteur se compose de plusieurs sous-ensembles :
   Le premier de ces sous-ensembles est situé sur la partie mobile (1) du sélecteur. C'est un support (3) qui enferme une ampoule en verre contenant un contact électrique, type ILS (2). C'est ce contact relié au boîtier qui envoie un signal électrique lorsque le sélecteur est mis en mouvement. L'ampoule est scellée au support (3) par une colle type silicone lui permettant de ne pas subir les diverses vibrations de la moto (4).
   Le deuxième sous-ensemble se situe sur une partie fixe de l'engin (5). Il se constitue d'un support (6) ayant un logement permettant de faire coulisser une tige filetée (7). A son extrémité est placé un logement recevant un aimant (8). Placé au-dessus de l'ILS, il ferme le contact au moment ou le sélecteur est actionné. Un écrou (9) associé à la tige filetée autorise le réglage de la position de l'aimant. Le guidage qui en résulte doit être linéaire. C'est grâce à une tige lisse (10) placé en parallèle par rapport à la tige filetée que le mouvement de rotation est condamné. Cette tige coulisse à travers un orifice placé sur le support (5). Un ressort (11) positionné sur la tige (7), entre le support et l'aimant, maintien le réglage. Cet ajustement a pour but de détecter précisément le point de passage du rapport. L'ensemble est maintenu sur l'équipement grâce à un étrier (12) comportant une partie rugueuse suffisante pour créer un blocage. Cette pièce a aussi pour but d'orienter le sous-ensemble de telle sorte qu'elle coïncide avec le premier sous-ensemble lors de la mise en action du sélecteur.
      Ces deux sous-ensembles captent le mouvement du sélecteur dans un sens. Donc pour que le dispositif puisse savoir toutes les actions qui sont faites sur la boîte à vitesses, deux de ceux-ci sont nécessaires. Un capte la montée d'un rapport, l'autre la descente (Voir figure 3). Le deuxième sous-ensemble peut avoir le système de fixation décrit précédemment ou se reprendre sur les pièces avoisinantes au sélecteur.
   Le deuxième type de capteur se présente sous la forme d'un boîtier (13) lié à une partie fixe de l'engin. A l'intérieur sont positionnés deux photo-interrupteurs (14) qui captent les mouvements allé et retour du sélecteur. Ces composants sont réglables en position. Ils sont supportés par des guides (15) qui se déplacent dans des glissières que forment le boîtier (15) et le bouchon (16). Les vis (17) les positionnent, et les ressorts (18) les maintiennent en position. Le mobile (19) est lié à la tige (20) qui elle-même est reliée à une partie mobile du sélecteur. Lorsque qu'il est actionné il découvre les photo-interrupteurs et déclenche les signaux électriques.
   Le troisième type de capteur (33) se présente sous la forme d'un boîtier (34 et 35) lié à une partie fixe de l'engin (5) par l'intermédiaire de la rotule (36). L'intérieur du boîtier prend la forme d'un potentiomètre linéaire (37) afin qu'il puisse y être maintenu. Le boîtier (34) loge aussi une bague (38) pour le guidage de la tige ainsi qu'un joint (39) afin d'assurer l'étanchéité à l'eau et aux poussières. La tige (40), est reliée d'un côté au curseur du potentiomètre linéaire, et de l'autre à une partie mobile du mécanisme de sélection (1) par l'intermédiaire de l'ensemble embout (41) et rotule (36). Ces dernières ont une embase qui leur permet d'être fixées soit sur une surface plane, soit sur une surface cylindrique. Cette polyvalence est possible grâce à la cavité de l'embase (42) dans laquelle loge de la colle, pour une fixation sur surface plane. Et, aux parois sécables (43), une fois retirées, qui permettent le passage d'un axe. Pour le maintien sur ce dernier, il est nécessaire de le faire avec des liens de type collier de serrage plastique utilisé en électricité. Ils passent par les trous (44) et entour l'axe. Ainsi installé le capteur peut suivre les mouvements du sélecteur.

Le boîtier électronique loge un microprocesseur. Il reçoit les informations du capteur et commande l'afficheur de sorte que le caractère montré soit en concordance avec le réel rapport engagé. Le troisième type de capteur (33) envois ces informations au microprocesseur (45) via un comparateur (46). Ce dernier laisse passer l'information que lorsque le seuil prédéfinie par les potentiomètres (47 et 48) est atteins. Les seuils haut et bas sont atteints lorsque le sélecteur est mis en mouvement. Des voyants (49 et 50) signalent les limites des mouvements du capteur, et (51 et 52) le point de passage de vitesse.

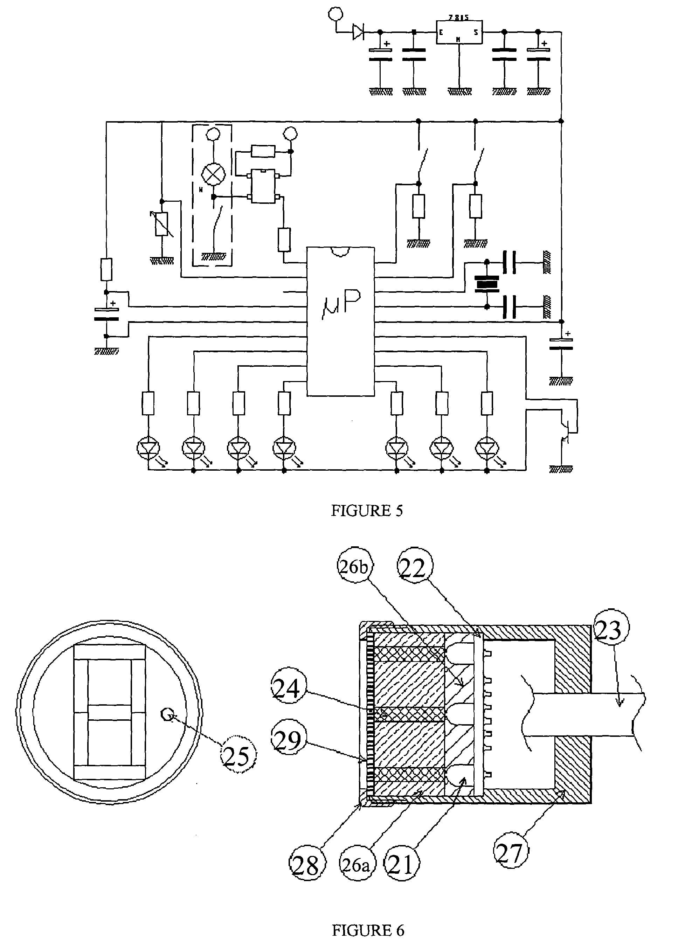

Le signal électrique du voyant de la position neutre de l'engin (équipement d'origine) est relié à ce même boîtier. Lorsque ce voyant est allumé, il lui indique qu'il faut afficher le caractère 0, et ceci a aussi pour but de recaler le dispositif en cas de dysfonctionnement de l'un des capteurs (Figure 5). C'est une réinitialisation du programme.

L'afficheur élaboré utilise des Led de type Ultra-luminescente. En effet ce composant électronique est utilisé ici du fait de sa haute luminosité. Il permet de palier aux problèmes de visibilité en plein jour.
Avantageusement l'utilisation d'un écran LCD permet aussi de palier au problème de visibilité en plein jour.

Afin de former un caractère entier, 7 Leds (21) sont implantées sur un circuit électronique (22). Leur alimentation est assurée par le boîtier électronique via le câble (23). Des diffuseurs leurs sont associés et permettent de mettre en forme le rayon lumineux (24). Pour être utilisé à n'importe quel moment de la journée une photo-résistance (25) mesure la luminosité ambiante et, via le processeur, gère le scintillement de chaque Led. Pour l'écran LCD le microcontrôleur gère la puissance de son éclairage. Il la baisse pour ne pas éblouir le pilote dans l'obscurité.

Les diffuseurs sont maintenus en position par des cales (26a et 26b) dans un boîtier (27). Ce dernier est muni d'un bouchon (28) et d'un hublot (29) permettant de visualiser le caractère.

De nombreuses pièces de ce montage peuvent être réalisées par l'industrie plasturgique (3 ; 13 ; 19 ; 15 ; 16 ; 27 ; 26a ; 26b ; 24 ; 34 ; 35 ; 36 ; 41). D'autres font appel à l'industrie électronique (22 ; circuit électronique et câblerie). Les pièces restantes sont concevables par l'industrie métallurgique (6 à 12 ; 20 ; 17 ; 40).

## Revendications

1. Dispositif pour indiquer le rapport engagé d'une boîte à vitesses de type moto **caractérisé en ce qu'**il comporte un capteur situé au niveau du sélecteur, un boîtier électronique gérant les entrées et sorties du dispositif, et un afficheur de type Ultra-luminescant pour être visible en toute situation. Ce montage peut être utilisé sur n'importe quel engin étant équipé de ce type de boîte à vitesses.

2. Dispositif selon la revendication 1 **caractérisé en ce que** le capteur se présente sous une première forme utilisant des contacts électriques (2) (ILS). Ce contact est logé dans un support (3) et est fixé grâce à une colle (4) de type silicone pour être isolé des vibrations que génère l'engin. Cet ensemble est fixé à une partie mobile du sélecteur de l'engin.

3. Dispositif selon la revendication 2 **caractérisé en ce que** l'ensemble contenant le contact (2, 3,4) est associé à une porte aimant (8) guidé linéairement (7,10), monté sur un support (6). Le ressort (11) et l'écrou (9) inclus permettent le réglage de la position de l'aimant.

4. Dispositif selon la revendication 2 **caractérisé en ce que** l'ensemble porte aimant (7, 8, 9, 10,11) est immobilisé à une partie fixe de l'engin (5) grâce à un étrier (12) comportant une partie rugueuse. Ceci permet de faire coïncider les deux sous-ensembles tout en ayant un bon maintien.

5. Dispositif selon la revendication 1 **caractérisé en ce que** le capteur de deuxième type se présente sous la forme d'un boîtier (13). Il contient des photos interrupteurs (14) qui peuvent être positionnés grâce aux guides (15) et aux vis (17).

6. Dispositif selon la revendication 5 **caractérisé en ce que** les guides coulisses dans les rainures que forment le boîtier (13) et le bouchon (16).Les ressorts (18) sont là pour maintenir le réglage de la position.

7. Dispositif selon la revendication 5 **caractérisé en ce que** le mobile (19) lié à la tige (20) met en action les photos interrupteurs (14)

8. Dispositif selon la revendication 4 **caractérisé en ce que** le boîtier (13) est lié à une partie fixe de l'engin, et la tige (20) lié à une partie mobile du sélecteur.

9. Dispositif selon la revendication 1 **caractérisé en ce que** le boîtier électronique reçoit le signal électrique du voyant de position neutre de l'engin afin de synchroniser le programme avec la boîte à vitesses.

10. Dispositif selon la revendication 1 **caractérisé en ce que** l'afficheur utilise des LED Ultra-luminescante (21) qui diffusent leurs rayons lumineux à travers des diffuseurs (24) pour former un caractère.

11. Dispositif selon la revendication 1 **caractérisé en ce que** le capteur se présente sous une troisième forme utilisant un potentiomètre linéaire (37) maintenu en position dans un boîtier (34 et 35). Il contient aussi une bague de guidage (38) et un joint d'étanchéité (x) pour la tige (39). Cet ensemble est lié à une partie fixe par une rotule (36).

12. Dispositif selon la revendication 11 **caractérisé en ce que** la tige (40) lie le curseur du potentiomètre linéaire à l'ensemble embout (41) plus rotule (36) qui lui même est lié à une partie mobile du mécanisme de sélection de la boîte à vitesses.

13. Dispositif selon la revendication 11 **caractérisé en ce que** le capteur soit lié aux parties mobile et fixe de l'engin par une rotule (36) qui peux être fixé soit avec de la colle sur une surface plane grâce à la cavité (42), soit avec des colliers de serrage en plastique sur une surface cylindrique grâce à l'extraction des parties sécables (43).

14. Dispositif selon la revendication 1 **caractérisé en ce que** le boîtier contient, les composants électronique donnant l'ordre au microcontrôleur (45) d'afficher le caractère correspondant selon les réglages effectués sur les potentiomètres (47 et 48) et, l'afficheur. Ces réglages sont indiqués par les voyants (51 et 52). Les indicateurs (49 et 50) donnent les limites des déplacements.
